# EUROPEAN PATENT SPECIFICATION

(11) **EP 3 679 234 B1**
(45) Date of publication and mention of the grant of the patent: **21.02.2024**
(21) Application number: 18793603.4
(22) Date of filing: 16.10.2018
(51) Int. Cl.: F02C 9/26, F02C 9/40

(54) **METHOD FOR OPERATING A GAS TURBINE OF A POWER PLANT WITH GASEOUS FUEL AND LIQUID FUEL**
VERFAHREN ZUM BETREIBEN EINER GASTURBINE EINES KRAFTWERKS MIT GASFÖRMIGEM BRENNSTOFF UND FLÜSSIGEM BRENNSTOFF
PROCÉDÉ DE FONCTIONNEMENT D'UNE TURBINE À GAZ D'UNE CENTRALE ÉLECTRIQUE À COMBUSTIBLE GAZEUX ET COMBUSTIBLE LIQUIDE

(30) Priority: 07.11.2017 EP 17200271
(43) Date of publication of application: 15.07.2020
(73) Proprietor: Siemens Energy Global GmbH & Co. KG, 81739 München (DE)
(72) Inventor: NEVESTVEIT, Geir, 610 12 Hällestad (SE); PERNU, Sebastian, 603 49 Norrköping (SE); EKMAN, Mats, 612 36 Finspång (SE)
(86) International application number: PCT/EP2018/078226
(87) International publication number: WO 2019/091710

(56) References cited:
- US-A- 2 933 894
- US-A- 3 766 734
- US-A- 4 157 012
- US-A1- 2016 076 461

## Description

The present invention relates to a method for operating a gas turbine of a power plant with gaseous fuel and liquid fuel, wherein the gaseous fuel is fed into a combustion chamber of the gas turbine from a gaseous fuel supply through a gaseous fuel supply line at a flow rate adjustable by gaseous fuel flow rate adjusting means, and wherein the liquid fuel is fed into the combustion chamber from a liquid fuel supply through a liquid fuel supply line at a flow rate adjustable by a liquid fuel flow rate adjusting means.

For example, US 3766734 A1 refers to a fuel control system for a gas turbine.

Since the amount of available gaseous fuel, such as natural gas, can vary over time, it is a common industry requirement that a gas turbine can be operated on both gaseous fuel and liquid fuel in order to be able to always cover the demand on the needed power output. During a normal operational mode of such a gas turbine the different fuels are only used one at a time. Thus, in order to change the fuel type it is necessary to switch from either fuel to the other fuel, what is done automatically and takes approximately between 1 to 15 minutes. During this transition phase the feeding rate of one fuel is ramped up while the feeding rate of the other fuel is ramped down. However, such ramping up and down goes along with an unstable operation of the gas turbine, what is not desirable.

Against this background it is an object of the present invention to provide an alternative method for operating a gas turbine of a power plant with gaseous fuel and liquid fuel.

In order to solve this object the present provides a method of the abovementioned kind in accordance with claim 1 and comprising the steps of a) simultaneously feeding gaseous fuel at a gaseous fuel flow rate and liquid fuel at a liquid fuel flow rate into the combustion chamber (3) during a normal operational mode of the gas turbine (2), wherein the gaseous fuel flow rate and the liquid fuel flow rate are adjusted to achieve the desired power output of the gas turbine (2); b) monitoring the actual gaseous fuel pressure in the gaseous fuel supply line at a position between the gaseous fuel supply (5) and the gaseous fuel control valve (8); and, c) when the actual gaseous fuel pressure drops below a predetermined gaseous fuel pressure threshold value, leaving the normal operational mode of the gas turbine (2) by automatically decreasing the gaseous fuel flow rate and increasing the liquid fuel flow rate, and, d) as soon as the actual gaseous fuel pressure reaches a set value above the predetermined gaseous fuel pressure threshold value, entering the normal operational mode of the gas turbine by automatically increasing the gaseous fuel flow rate and decreasing the liquid fuel flow rate, wherein the set gaseous fuel pressure value is 0.3 to 0.7 bar above the predetermined gaseous fuel pressure threshold value, wherein the gaseous fuel flow rate adjusting means is formed by a gaseous fuel control valve. The present invention proposes to run a gas turbine on both gaseous and liquid fuel during the normal operational mode of the gas turbine. As long as enough gaseous fuel is available, the actual gaseous fuel pressure in the gaseous fuel supply line at a position between the gaseous fuel supply and the gaseous fuel flow rate adjusting means stays above the predetermined gaseous fuel threshold value, which is chosen in such a manner that an orderly supply of the gaseous fuel for running the gas turbine can reliably be achieved, i.e. that a proper spray of gaseous fuel into the combustion chamber is assured. As soon as the actual gaseous fuel pressure in the gaseous fuel supply line at a position between the gaseous fuel supply and the gaseous fuel flow rate adjusting means drops below the predetermined gaseous fuel pressure threshold value, because only a limited amount of gaseous fuel is available, the gaseous fuel flow rate is automatically decreased in step c) by actuating the gaseous fuel flow rate adjusting means. At the same time the liquid fuel flow rate is increased by actuating the liquid fuel flow rate adjusting means. Accordingly, the gas turbine is then operated with a reduced ratio of gaseous fuel and with an increased ratio of liquid fuel. As soon as the actual gaseous fuel pressure reaches the predetermined gaseous fuel pressure threshold value or a set gaseous fuel pressure value above the predetermined gaseous fuel pressure threshold value again, the gaseous fuel flow rate is automatically increased and the liquid fuel flow rate is automatically decreased in step d), such that the normal operational mode of the gas turbine is restored. By operating a gas turbine in this manner, the used amount of gaseous fuel can be optimized to the maximum available amount of gaseous fuel while always running the gas turbine on both fuels at the same time. In fact, the amount of used liquid fuel can be reduced by approximately 50% when running the gas turbine on the mixed fuel mode compared with the present way of using either gaseous or liquid fuel. This is desirable because the CO2 emission can be reduced by 25% when using gaseous fuel instead of liquid fuel. Moreover, running a gas turbine on liquid fuel is more expensive than running it on gaseous fuel. Accordingly, the costs for running the gas turbine can be reduced. Furthermore, the above described ramping for changing the fuel type is no longer necessary. Accordingly, unstable operations of the gas turbine are avoided.
The gaseous fuel flow rate adjusting means is formed by a gaseous fuel control valve.
The liquid fuel flow rate adjusting means may be formed by a variable speed high pressure pump.
Alternatively, the liquid fuel supply line can be provided with a constant speed high pressure pump, wherein the liquid fuel flow rate adjusting means is formed by a liquid fuel control valve.

If in step d) a set gaseous fuel pressure value above the predetermined gaseous fuel pressure threshold value is used instead of the predetermined gaseous fuel pressure threshold value itself, the set gaseous fuel pressure value is 0.3 to 0.7 bar above the predetermined gaseous fuel pressure threshold value, in particular 0.5 bar above the predetermined gaseous fuel pressure threshold value. The use of such a set gaseous fuel pressure value above the predetermined gaseous fuel pressure threshold value is of advantage in that too many switching operations between steps c) and d) can be prevented, when the actual gaseous fuel pressure moves in a band around the predetermined gaseous fuel pressure threshold. The claimed range of 0.3 to 0.7 bar above the predetermined gaseous fuel pressure threshold value has proven to be effective in this regard.

In step a) the liquid fuel flow rate is preferably set to be at a predefined minimum value, said predefined minimum value being a function of the turbine load, and the gaseous fuel flow rate is varied to suit to the desired power output of the gas turbine, in particular on the basis of a gaseous fuel control valve curve representing energy flow versus the opening state of the gaseous fuel control valve. In other words, the liquid fuel flow rate is always maintained at a predefined minimum value, which may slightly vary as a function of the desired power output of the gas turbine, while the actual variations of the desired power output of the gas turbine are balanced by corresponding adjustments of the gaseous fuel flow rate. This ensures an optimized consumption of gaseous fuel, while the consumption of liquid fuel can be maintained on a constant low level. When the gaseous fuel flow rate adjusting means is formed by a gaseous fuel control valve, the variation of the gaseous fuel flow rate to suit to the desired output power is advantageously realized on the basis of a gaseous fuel control valve curve representing energy flow versus the opening state of the gaseous fuel control valve. Such a curve can be calculated on the basis of the assumption that the gaseous fuel composition, the gaseous fuel pressure in the gaseous fuel supply line at a position between the gaseous fuel supply and the gaseous fuel control valve and the temperature of the gaseous fuel are constant values, which do not vary over time, which is true for more than 80-90% of all gas turbines installed these days.

According to one aspect of the method according to the present invention the actual liquid fuel pressure in the liquid fuel supply line at a position between the liquid fuel flow rate adjusting means and the combustion chamber is monitored, and the liquid fuel flow rate adjusting means is automatically controlled in such a manner that the actual liquid fuel pressure does not drop below a preset minimum liquid fuel pressure threshold value. This ensures a proper spray of liquid fuel into the combustion chamber and hence a safe operation of the gas turbine.

According to a further aspect of the method according to the present invention the actual liquid fuel pressure in the liquid fuel supply line at a position between the liquid fuel flow rate adjusting means and the combustion chamber is monitored, and the liquid fuel flow rate adjusting means is automatically controlled during the normal operational mode of the gas turbine in such a manner that the actual liquid fuel pressure does not exceed a preset maximum liquid fuel pressure threshold value. Thus, the consumption of liquid fuel can be limited during the normal operational mode of the gas turbine.

Moreover, the present invention provides a power plant according to claim 8 comprising
- a gas turbine having a combustion chamber,
- a fuel supply system for supplying the combustion chamber with fuel and
- a control system for controlling the fuel supply according to an inventive method,
wherein the fuel supply system comprises
- a gaseous fuel supply, which is connected to the combustion chamber via a gaseous fuel supply line comprising gaseous fuel flow rate adjusting means and a pressure measuring device arranged at a position between the gaseous fuel supply and the gaseous fuel flow rate adjusting means, wherein the control system is designed to control the gaseous fuel flow rate adjusting means on the basis of data representing the desired power output of the gas turbine and on the basis of measured data delivered by the pressure measuring device, and a liquid fuel supply, which is connected to the combustion chamber via a liquid fuel supply line comprising a high pressure pump, liquid fuel flow rate adjusting means and a pressure measuring device arranged at a position between the liquid fuel flow rate adjusting means and the combustion chamber, wherein the control system is designed to control the liquid fuel flow rate adjusting means on the basis of data representing the desired power output of the gas turbine and on the basis of measured data delivered by the pressure measuring device.

The gaseous fuel flow rate adjusting means is preferably formed by a gaseous fuel control valve.

The high pressure pump may be formed by a variable speed high pressure pump, which also forms the liquid fuel flow rate adjusting means.

Alternatively, the high pressure pump may be a constant speed high pressure pump, wherein the liquid fuel flow rate adjusting means is formed by a liquid fuel control valve arranged between the high pressure pump and the combustion chamber.

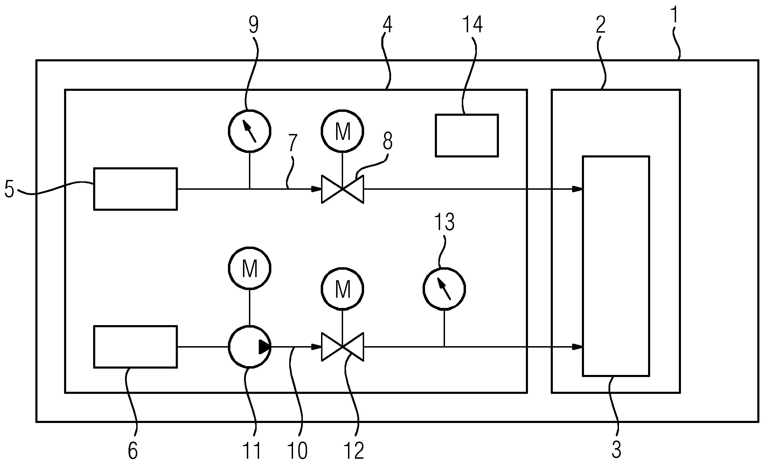

The advantages and further features of the present invention will become apparent from the following description of a method according to an embodiment of the present invention with reference to the drawing showing schematically a gaseous and liquid fuel supply system of a combustion chamber of a power plant gas turbine.

The power plant 1 comprises at least one gas turbine 2 having a combustion chamber 3. Moreover, a fuel supply system 4 is provided for supplying the combustion chamber 3 with gaseous and liquid fuel. The fuel supply system 4 has a gaseous fuel supply 5 and a liquid fuel supply 6. The gaseous fuel supply 5 is connected to the combustion chamber 3 via a gaseous fuel supply line 7. As a gaseous fuel flow rate adjusting means for adjusting the flow rate of the gaseous fuel entering the combustion chamber 3 the gaseous fuel supply line 7 comprises a gaseous fuel control valve 8, which is adjustable by a motor. Moreover, a pressure measuring device 9 is provided at a position between the gaseous fuel supply 5 and the gaseous fuel control valve 8. The liquid fuel supply 6 is connected to the combustion chamber 3 via a liquid fuel supply line 10, which is provided with a constant speed high pressure pump 11, a liquid fuel control valve 12 as a liquid fuel flow rate adjusting means for adjusting the flow rate of the liquid fuel entering the combustion chamber 3, which is arranged on the downstream side of the pump 11 and is adjustable by a motor, and a pressure measuring device 13 positioned between the liquid fuel control valve 12 and the combustion chamber 3. Moreover, the fuel supply system 4 comprises a control system 14 for controlling the fuel flow rates by manipulating the gaseous fuel control valve 8 and the liquid fuel control valve 12 on the basis of the desired power output of the gas turbine 2 as well as on the basis of the actual pressures measured by the pressure measuring devices 9 and 13, as it is described in the following.

In its normal operational mode the combustion chamber 3 is simultaneously fed with gaseous fuel at a gaseous fuel flow rate and with liquid fuel at a liquid fuel flow rate, wherein the gaseous fuel flow rate and the liquid fuel flow rate are adjusted by the control system 14 starting from a basic setting to achieve the desired power output of the gas turbine 2. According to this basic setting, the gaseous fuel control valve 8 is e.g. opened 60% and the liquid fuel control valve 12 is opened 10%, so that much more gaseous fuel than liquid fuel is consumed. As soon as the desired power output changes, only the gaseous fuel flow rate is varied in the normal operational mode to suit to the new desired power output of the gas turbine 2, while the liquid fuel flow rate is kept at a predefined minimum value being a function of the turbine load. This variation of the gaseous fuel flow rate is presently carried out by manipulating the gaseous fuel control valve 8 on the basis of a gaseous fuel control valve curve, which is stored in the control system 14 and represents the energy flow versus the opening state of the gaseous fuel control valve 8. Such a gaseous fuel control valve curve may be created on the assumption, that the temperature, the pressure and the composition of the gaseous fuel delivered from the gaseous fuel supply 5 during the normal operational mode are constant over the time.

The actual gaseous fuel pressure in the gaseous fuel supply line 7 at a position between the gaseous fuel supply 5 and the gaseous fuel control valve 8 as well as the actual liquid fuel pressure in the liquid fuel supply line 10 at a position between the liquid fuel control valve 12 and the combustion chamber 3 are permanently monitored using the pressure measuring devices 9 and 13 as described hereinafter:
If it is determined by the pressure measuring device 13 that the actual liquid fuel pressure drops below a preset minimum liquid fuel pressure threshold value, the liquid fuel control valve 12 is automatically controlled by the control system 14 in such a manner that the actual liquid fuel pressure is raised above the preset minimum liquid fuel pressure threshold value. The preset liquid fuel pressure threshold value is chosen to be sufficiently above the pressure within the combustion chamber 3 in order to guarantee a proper spray of liquid fuel into the combustion chamber 3 and hence a safe operation of the gas turbine 2.

If it is determined by the pressure measuring device 13 that the actual liquid fuel pressure rises above a preset maximum liquid fuel pressure threshold value, the liquid fuel control valve 12 is automatically controlled by the control system 14 in such a manner that the actual liquid fuel pressure is lowered to a value between the preset minimum and maximum liquid fuel pressure threshold values. Accordingly, an undesirably large liquid fuel consumption during the normal operational mode of the gas turbine 2 is prevented.

If it is determined by the pressure measuring device 9 that the actual gaseous fuel pressure in the gaseous fuel supply line 7 upstream the gaseous fuel control valve 8 drops below a predetermined gaseous fuel pressure threshold value stored in the control system 14, because only a limited amount of gaseous fuel is available from the gaseous fuel supply 5, the normal operational mode of the gas turbine 2 is left by automatically decreasing the gaseous fuel flow rate by actuating the gaseous fuel control valve 8, so that it is opened e.g. 50%. At the same time the liquid fuel flow rate is automatically increased by actuating the liquid fuel control valve 12, so that it is opened e.g. 20%. Accordingly, the gas turbine 2 is then operated with a reduced ratio of gaseous fuel and with an increased ratio of liquid fuel. At this operational mode the monitoring of the exceedance of the maximum liquid fuel pressure threshold value is paused. As soon as it is determined by the pressure measuring device 9 that the actual gaseous fuel pressure has reached the predetermined gaseous fuel pressure threshold value or a set gaseous fuel pressure value above the predetermined gaseous fuel pressure threshold value again, the normal operational mode of the gas turbine 2 is restored by automatically increasing the gaseous fuel flow rate and automatically decreasing the liquid fuel flow rate. Moreover, the monitoring of the exceedance of the maximum liquid fuel pressure threshold value is activated again. For entering the normal operational mode again, a set gaseous fuel pressure value above the predetermined gaseous fuel pressure threshold value is used instead of using the predetermined gaseous fuel pressure threshold value. This is of advantage in that too many switching operations between steps c) and d) can be prevented, when the actual gaseous fuel pressure moves in a band around the predetermined gaseous fuel pressure threshold. The set gaseous fuel pressure value is in the range of 0.3 to 0.7 bar above the predetermined gaseous fuel pressure threshold.

By operating the gas turbine 2 in the above-described manner, the used amount of gaseous fuel is optimized to the maximum available amount of gaseous fuel while always running the gas turbine 2 on both fuels at the same time. It has been ascertained that the amount of used liquid fuel can be reduced by approximately 50% when running the gas turbine 2 on the mixed fuel mode compared with the previous way of using either gaseous or liquid fuel. This is desirable because the CO2 emission can be reduced by 25% when using gaseous fuel instead of liquid fuel. Moreover, running a gas turbine 2 on liquid fuel is more expensive than running it on gaseous fuel. Accordingly, the costs for running the gas turbine 2 are reduced. Furthermore, a ramping for changing the fuel type is not necessary. Accordingly, unstable operations of the gas turbine 2 are avoided.

It should be noted that the present invention is not limited to the specific embodiment described before, i.e. modifications are possible without leaving the scope of protection defined by the accompanying claims. For example it is possible to use a variable speed high pressure pump instead of the constant speed high pressure pump 11. In this case the liquid fuel control valve 12 can be omitted because the liquid fuel pressure of the liquid fuel entering the combustion chamber 3 can then be adjusted by the variable speed high pressure pump as a liquid fuel flow rate adjusting means.

## Claims

1. Method for operating a gas turbine (2) of a power plant (1) with gaseous fuel and liquid fuel,
wherein the gaseous fuel is fed into a combustion chamber (3) of the gas turbine (2) from a gaseous fuel supply (5) through a gaseous fuel supply line (7) at a flow rate adjustable by gaseous fuel flow rate adjusting means,
wherein the gaseous fuel flow rate adjusting means is formed by a gaseous fuel control valve, and
wherein the liquid fuel is fed into the combustion chamber (3) from a liquid fuel supply (6) through a liquid fuel supply line (10) at a flow rate adjustable by a liquid fuel flow rate adjusting means, the method comprising the steps of:
a) simultaneously feeding gaseous fuel at a gaseous fuel flow rate and liquid fuel at a liquid fuel flow rate into the combustion chamber (3) during a normal operational mode of the gas turbine (2), wherein the gaseous fuel flow rate and the liquid fuel flow rate are adjusted to achieve the desired power output of the gas turbine (2);
b) monitoring the actual gaseous fuel pressure in the gaseous fuel supply line at a position between the gaseous fuel supply (5) and the gaseous fuel control valve (8); and,
c) when the actual gaseous fuel pressure drops below a predetermined gaseous fuel pressure threshold value, leaving the normal operational mode of the gas turbine (2) by automatically decreasing the gaseous fuel flow rate and increasing the liquid fuel flow rate, and **characterized by** the step of:
d) as soon as the actual gaseous fuel pressure reaches a set value above the predetermined gaseous fuel pressure threshold value, entering the normal operational mode of the gas turbine by automatically increasing the gaseous fuel flow rate and decreasing the liquid fuel flow rate,
wherein the set gaseous fuel pressure value is 0.3 to 0.7 bar above the predetermined gaseous fuel pressure threshold value.

2. Method according to claim 1,
**characterized in that** the liquid fuel flow rate adjusting means is formed by a variable speed high pressure pump.

3. Method according to claim 1,
**characterized in that** the liquid fuel supply line (10) is provided with a constant speed high pressure pump, and **in that** the liquid fuel flow rate adjusting means is formed by a liquid fuel control valve (12).

4. Method according to one of the foregoing claims,
**characterized in that** the set gaseous fuel pressure value is 0.5 bar above the predetermined gaseous fuel pressure threshold value.

5. Method according to one of the foregoing claims,
**characterized in that** in step a) the liquid fuel flow rate is set to be at a predefined minimum value, said predefined minimum value being a function of the turbine load, and the gaseous fuel flow rate is varied to suit to the desired power output of the gas turbine (2), in particular on the basis of a gaseous fuel control valve curve representing energy flow versus the opening state of the gaseous fuel control valve (8) .

6. Method according to one of the foregoing claims,
**characterized in that** the actual liquid fuel pressure in the liquid fuel supply line (10) at a position between the liquid fuel flow rate adjusting means and the combustion chamber (3) is monitored, and **in that** the liquid fuel flow rate adjusting means is automatically controlled in such a manner that the actual liquid fuel pressure does not drop below a preset minimum liquid fuel pressure threshold value.

7. Method according to one of the foregoing claims,
**characterized in that** the actual liquid fuel pressure in the liquid fuel supply line (10) at a position between the liquid fuel flow rate adjusting means and the combustion chamber (3) is monitored, and **in that** the liquid fuel flow rate adjusting means is automatically controlled during the normal operational mode of the gas turbine (2) in such a manner that the actual liquid fuel pressure does not exceed a preset maximum liquid fuel pressure threshold value.

8. Power plant (1) comprising
- a gas turbine (2) having a combustion chamber (3),
- a fuel supply system (4) for supplying the combustion chamber (3) with fuel and
- a control system (14) for controlling the fuel supply according to a method according to one of the foregoing claims,
wherein the fuel supply system (4) comprises
- a gaseous fuel supply (5), which is connected to the combustion chamber (3) via a gaseous fuel supply line (7) comprising gaseous fuel flow rate adjusting means and a pressure measuring device (9) arranged at a position between the gaseous fuel supply (5) and the gaseous fuel flow rate adjusting means, wherein the control system (14) is designed to control the gaseous fuel flow rate adjusting means on the basis of data representing the desired power output of the gas turbine (2) and on the basis of measured data delivered by the pressure measuring device (9), and
- a liquid fuel supply (6), which is connected to the combustion chamber (3) via a liquid fuel supply line (10) comprising a high pressure pump (11), liquid fuel flow rate adjusting means and a pressure measuring device (13) arranged at a position between the liquid fuel flow rate adjusting means and the combustion chamber (3), wherein the control system (14) is designed to control the liquid fuel flow rate adjusting means on the basis of data representing the desired power output of the gas turbine (2) and on the basis of measured data delivered by the pressure measuring device (13).

9. Power plant (1) according to claim 8,
**characterized in that** the gaseous fuel flow rate adjusting means is formed by a gaseous fuel control valve.

10. Power plant (1) according to claim 8 or 9,
**characterized in that** the high pressure pump is a variable speed high pressure pump, which also forms the liquid fuel flow rate adjusting means.

11. Power plant (1) according to claim 8 or 9,
**characterized in that** the high pressure pump is a constant speed high pressure pump, and **in that** the liquid fuel flow rate adjusting means is formed by a liquid fuel control valve arranged between the high pressure pump and the combustion chamber (3).

## Patentansprüche

1. Verfahren zum Betreiben einer Gasturbine (2) eines Kraftwerks (1) mit Brenngas und Flüssigbrennstoff, wobei das Brenngas von einer Brenngaszufuhr (5) durch eine Brenngaszuleitung (7) mit einer Strömungsgeschwindigkeit, die durch eine Brenngasströmungsgeschwindigkeitseinstelleinrichtung einstellbar ist, in eine Brennkammer (3) der Gasturbine (2) gespeist wird,
wobei die Brenngasströmungsgeschwindigkeitseinstelleinrichtung durch ein Brenngasregelventil ausgebildet ist und
wobei der Flüssigbrennstoff von einer Flüssigbrennstoffzufuhr (6) durch eine Flüssigbrennstoffzuleitung (10) mit einer Strömungsgeschwindigkeit, die durch eine Flüssigbrennstoffströmungsgeschwindigkeitseinstelleinrichtung einstellbar ist, in die Brennkammer (3) gespeist wird, wobei das Verfahren die folgenden Schritte umfasst:
a) gleichzeitiges Speisen von Brenngas mit einer Brenngasströmungsgeschwindigkeit und Flüssigbrennstoff mit einer Flüssigbrennstoffströmungsgeschwindigkeit in die Brennkammer (3) während eines normalen Betriebsmodus der Gasturbine (2), wobei die Brenngasströmungsgeschwindigkeit und die Flüssigbrennstoffströmungsgeschwindigkeit eingestellt sind, um die gewünschte Wirkleistung der Gasturbine (2) zu erzielen;
b) Überwachen des tatsächlichen Brenngasdrucks in der Brenngaszuleitung an einer Position zwischen der Brenngaszufuhr (5) und dem Brenngasregelventil (8) und,
c) wenn der tatsächliche Brenngasdruck unter einen festgelegten Brenngasdruckschwellenwert fällt, Verlassen des normalen Betriebsmodus der Gasturbine (2) durch automatisches Verringern der Brenngasströmungsgeschwindigkeit und Erhöhen der Flüssigbrennstoffströmungsgeschwindigkeit, und **gekennzeichnet durch** den folgenden Schritt:
d) sobald der tatsächliche Brenngasdruck einen Sollwert über dem festgelegten Brenngasdruckschwellenwert erreicht, Aktivieren des normalen Betriebsmodus der Gasturbine durch automatisches Erhöhen der Brenngasströmungsgeschwindigkeit und Verringern der Flüssigbrennstoffströmungsgeschwindigkeit,
wobei der Brenngasdrucksollwert 0,3 bis 0,7 bar über dem festgelegten Brenngasdruckschwellenwert liegt.

2. Verfahren nach Anspruch 1,
**dadurch gekennzeichnet, dass** die Flüssigbrennstoffströmungsgeschwindigkeitseinstelleinrichtung durch eine drehzahlvariable Hochdruckpumpe ausgebildet ist.

3. Verfahren nach Anspruch 1,
**dadurch gekennzeichnet, dass** die Flüssigbrennstoffzuleitung (10) mit einer Hochdruckpumpe mit konstanter Drehzahl versehen ist, und dadurch, dass die Flüssigbrennstoffströmungsgeschwindigkeitseinstelleinrichtung durch ein Flüssigbrennstoffregelventil (12) ausgebildet ist.

4. Verfahren nach einem der vorstehenden Ansprüche, **dadurch gekennzeichnet, dass** der Brenngasdrucksollwert 0,5 bar über dem festgelegten Brenngasdruckschwellenwert liegt.

5. Verfahren nach einem der vorstehenden Ansprüche, **dadurch gekennzeichnet, dass** in Schritt a) die Flüssigbrennstoffströmungsgeschwindigkeit auf einen festgelegten Mindestwert eingestellt ist, wobei der festgelegte Mindestwert eine Funktion der Turbinenlast ist, und die Brenngasströmungsgeschwindigkeit variabel ist, um zur gewünschten Wirkleistung der Gasturbine (2) zu passen, insbesondere auf Grundlage einer Brenngasregelventilkurve, die den Energiefluss gegenüber dem Öffnungszustand des Brenngasregelventils (8) darstellt.

6. Verfahren nach einem der vorstehenden Ansprüche, **dadurch gekennzeichnet, dass** der tatsächliche Flüssigbrennstoffdruck in der Flüssigbrennstoffzuleitung (10) an einer Position zwischen der Flüssigbrennstoffströmungsgeschwindigkeitseinstelleinrichtung und der Brennkammer (3) überwacht wird, und dadurch, dass die Flüssigbrennstoffströmungsgeschwindigkeitseinstelleinrichtung derart automatisch gesteuert wird, dass der tatsächliche Flüssigbrennstoffdruck nicht unter einen festgelegten Flüssigbrennstoffdruckmindestschwellenwert fällt.

7. Verfahren nach einem der vorstehenden Ansprüche, **dadurch gekennzeichnet, dass** der tatsächliche Flüssigbrennstoffdruck in der Flüssigbrennstoffzuleitung (10) an einer Position zwischen der Flüssigbrennstoffströmungsgeschwindigkeitseinstelleinrichtung und der Brennkammer (3) überwacht wird, und dadurch, dass die Flüssigbrennstoffströmungsgeschwindigkeitseinstelleinrichtung während des normalen Betriebsmodus der Gasturbine (2) derart automatisch gesteuert wird, dass der tatsächliche Flüssigbrennstoffdruck einen festgelegten Flüssigbrennstoffdruckhöchstschwellenwert nicht überschreitet.

8. Kraftwerk (1), umfassend
- eine Gasturbine (2) mit einer Brennkammer (3),
- ein Brennstoffzufuhrsystem (4) zum Zuführen von Brennstoff zur Brennkammer (3) und
- ein Steuerungssystem (14) zum Steuern der Brennstoffzufuhr nach einem Verfahren nach einem der vorstehenden Ansprüche, wobei das Brennstoffzufuhrsystem (4) Folgendes umfasst:
- eine Brenngaszufuhr (5), die über eine Brenngaszuleitung (7), die eine Brenngasströmungsgeschwindigkeitseinstelleinrichtung und eine Druckmessvorrichtung (9), die an einer Position zwischen der Brenngaszufuhr (5) und der Brenngasströmungsgeschwindigkeitseinstelleinrichtung angeordnet ist, umfasst, mit der Brennkammer (3) verbunden ist, wobei das Steuerungssystem (14) dazu ausgestaltet ist, die Brenngasströmungsgeschwindigkeitseinstelleinrichtung auf Grundlage von Daten, welche die gewünschte Wirkleistung der Gasturbine (2) darstellen, und auf Grundlage von durch die Druckmessvorrichtung (9) gelieferten Messdaten zu steuern und
- eine Flüssigbrennstoffzufuhr (6), die über eine Flüssigbrennstoffzuleitung (10), die eine Hochdruckpumpe (11), eine Flüssigbrennstoffströmungsgeschwindigkeitseinstelleinrichtung und eine Druckmessvorrichtung (13), die an einer Position zwischen der Flüssigbrennstoffströmungsgeschwindigkeitseinstelleinrichtung und der Brennkammer (3) angeordnet ist, umfasst, mit der Brennkammer (3) verbunden ist, wobei das Steuerungssystem (14) dazu ausgestaltet ist, die Flüssigbrennstoffströmungsgeschwindigkeitseinstelleinrichtung auf Grundlage von Daten, welche die gewünschte Wirkleistung der Gasturbine (2) darstellen, und auf Grundlage von durch die Druckmessvorrichtung (13) gelieferten Messdaten zu steuern.

9. Kraftwerk (1) nach Anspruch 8, **dadurch gekennzeichnet, dass** die Brenngasströmungsgeschwindigkeitseinstelleinrichtung durch ein Brenngasregelventil ausgebildet ist.

10. Kraftwerk (1) nach Anspruch 8 oder 9, **dadurch gekennzeichnet, dass** die Hochdruckpumpe eine drehzahlvariable Hochdruckpumpe ist, die außerdem die Flüssigbrennstoffströmungsgeschwindigkeitseinstelleinrichtung ausbildet.

11. Kraftwerk (1) nach Anspruch 8 oder 9, **dadurch gekennzeichnet, dass** die Hochdruckpumpe eine Hochdruckpumpe mit konstanter Drehzahl ist, und dadurch, dass die Flüssigbrennstoffströmungsgeschwindigkeitseinstelleinrichtung durch ein Flüssigbrennstoffregelventil ausgebildet ist, das zwischen der Hochdruckpumpe und der Brennkammer (3) angeordnet ist.

## Revendications

1. Procédé pour faire fonctionner une turbine (2) à gaz d'une centrale (1) électrique au combustible gazeux et au combustible liquide,
dans lequel on envoie le combustible gazeux dans une chambre (3) de combustion de la turbine (2) à gaz, à partir d'une alimentation (5) en combustible gazeux par une ligne (7) d'alimentation en combustible gazeux à un débit réglable par un moyen de réglage du débit du combustible gazeux,
dans lequel le moyen de réglage du débit du combustible gazeux est formé par une vanne de réglage du combustible gazeux, et
dans lequel on envoie le combustible liquide dans la chambre (3) de combustion à partir d'une alimentation (6) en combustible liquide par une ligne (10) d'alimentation en combustible liquide à un débit réglable par un moyen de réglage du débit du combustible liquide, le procédé comprenant les stades dans lesquels :
a) on envoie simultanément du combustible gazeux à un débit de combustible gazeux et du combustible liquide à un débit de combustible liquide dans la chambre (3) de combustion pendant un mode de fonctionnement normal de la turbine (2) à gaz, dans lequel on règle le débit du combustible gazeux et le débit du combustible liquide pour obtenir la sortie de puissance souhaitée de la turbine (2) à gaz ;
b) on contrôle la pression réelle du combustible gazeux dans la ligne d'alimentation en combustible gazeux en une position entre l'alimentation (5) en combustible gazeux et la vanne (8) de réglage du combustible gazeux ; et,
c) lorsque la pression réelle du combustible gazeux s'abaisse en-dessous d'une valeur de seuil de pression du combustible gazeux déterminée à l'avance, on abandonne le mode de fonctionnement normal de la turbine (2) à gaz en diminuant automatiquement le débit du combustible gazeux et en augmentant le débit du combustible liquide, et **caractérisé par** les stades dans lesquels :
d) dès que la pression réelle du combustible gazeux atteint une valeur de consigne au-dessus de la valeur de seuil de la pression du combustible gazeux déterminée à l'avance, on entre dans le mode de fonctionnement normal de la turbine à gaz en augmentant automatiquement le débit du combustible gazeux et en diminuant le débit du combustible liquide,
dans lequel la valeur de la pression de consigne du combustible gazeux est supérieure de 0,3 à 0,7 bar à la valeur de seuil de la pression du combustible gazeux déterminée à l'avance.

2. Procédé suivant la revendication 1,
**caractérisé en ce que** le moyen de réglage du débit du combustible liquide est formé par une pompe à haute pression à vitesse variable.

3. Procédé suivant la revendication 1,
**caractérisé en ce que** la ligne (10) d'alimentation en combustible liquide est donnée par une pompe à haute pression à vitesse constante, et **en ce que** le moyen de réglage du débit du combustible liquide est formé par une vanne (12) de réglage du combustible liquide.

4. Procédé suivant l'une des revendications précédentes,
**caractérisé en ce que** la valeur de consigne de la pression du combustible gazeux est supérieure de 0,5 bar à la valeur de seuil de pression du combustible gazeux déterminée à l'avance.

5. Procédé suivant l'une des revendications précédentes,
**caractérisé en ce que**, dans le stade a), on règle le débit du combustible liquide à une valeur minimum définie à l'avance, la valeur minimum définie à l'avance étant une fonction de la charge de la turbine et on fait varier le débit du combustible gazeux pour s'adapter à la sortie de puissance souhaitée de la turbine (2) à gaz, en particulier sur la base d'une courbe de vanne de réglage du combustible gazeux représentant le débit d'énergie en fonction de l'état d'ouverture de la vanne (8) de réglage du combustible gazeux.

6. Procédé suivant l'une des revendications précédentes, **caractérisé en ce que** l'on contrôle la pression réelle du combustible liquide dans la ligne (10) d'alimentation en combustible liquide en une position entre le moyen de réglage du débit du combustible liquide et la chambre (3) de combustion, et **en ce que** on règle automatiquement le moyen de réglage du débit du combustible liquide, d'une manière telle que la pression réelle du combustible liquide ne s'abaisse pas en-dessous d'une valeur de seuil minimum fixée à l'avance de la pression du combustible liquide.

7. Procédé suivant l'une des revendications précédentes, **caractérisé en ce que** l'on contrôle la pression réelle du combustible liquide dans la ligne (10) d'alimentation en combustible liquide dans une position entre le moyen de réglage du débit du combustible liquide et la chambre (3) de combustion, et **en ce que** l'on règle automatiquement le moyen de réglage du débit du combustible liquide pendant le mode de fonctionnement normal de la turbine (2) à gaz, d'une manière telle que la pression réelle du combustible liquide n'excède pas une valeur de seuil maximum fixée à l'avance de la pression du combustible liquide.

8. Centrale (1) électrique comprenant
- une turbine (2) à gaz ayant une chambre (3) de combustion,
- un système (4) d'alimentation en combustible pour alimenter la chambre (3) de combustion en combustible et
- un système (14) de réglage pour régler l'alimentation en combustible suivant un procédé suivant l'une des revendications précédentes,
dans laquelle le système (4) d'alimentation en combustible comprend
- une alimentation (5) en combustible gazeux, qui communique avec la chambre (3) de combustion par une ligne (7) d'alimentation en combustible gazeux comprenant un moyen de réglage du débit du combustible gazeux et un dispositif (9) de mesure de la pression monté en une position entre l'alimentation (5) en combustible gazeux et le moyen de réglage du débit du combustible gazeux, dans laquelle le système (14) de réglage est conçu pour régler le moyen de réglage du débit du combustible gazeux sur la base d'une donnée représentant la sortie de puissance souhaitée de la turbine (2) à gaz et sur la base d'une donnée mesurée donnée par le dispositif (9) de mesure de la pression, et
- une alimentation (6) en combustible liquide, qui communique avec la chambre (3) de combustion par une ligne (10) d'alimentation en combustible liquide comprenant une pompe (11) à haute pression, un moyen de réglage du débit du combustible liquide et un dispositif (13) de mesure de la pression monté en une position entre le moyen de réglage du débit du combustible liquide et la chambre (3) de combustion, dans laquelle le système (14) de réglage est conçu pour régler le moyen de réglage du débit du combustible liquide sur la base d'une donnée représentant la sortie de puissance souhaitée de la turbine (2) à gaz et sur la base d'une donnée mesurée donnée par le dispositif (13) de mesure de la pression.

9. Centrale (1) électrique suivant la revendication 8,
**caractérisée en ce que** le moyen du réglage du débit du combustible gazeux est formé par une vanne de réglage du combustible gazeux.

10. Centrale (1) électrique suivant la revendication 8 ou 9, **caractérisée en ce que** la pompe à haute pression est une pompe à haute pression à vitesse variable, qui forme aussi le moyen de réglage du débit du combustible liquide.

11. Centrale (1) électrique suivant la revendication 8 ou 9, **caractérisée en ce que** la pompe à haute pression est une pompe à haute pression à vitesse constante, et **en ce que** le moyen de réglage du débit du combustible liquide est formé par une vanne de commande du combustible liquide montée entre la pompe à haute pression et la chambre (3) de combustion.
